# EUROPEAN PATENT APPLICATION

(11) **EP 3 208 799 A1**
(43) Date of publication of application: **23.08.2017**
(21) Application number: 17156263.0
(22) Date of filing: 15.02.2017
(51) Int. Cl.: G10L 13/00

(54) **SYSTEM AND METHOD FOR THE GENERATION OF DIGITAL AUDIOVISUAL CONTENTS CUSTOMISED WITH SPEECH SYNTHESIS**

(30) Priority: 16.02.2016 IT UB20160771; 03.03.2016 IT UA20161305
(71) Applicant: DOXEE S.p.A., 41123 Modena (IT)
(72) Inventor: GENERALI, Matteo, 41121 MODENA (IT); MIANO, Giuseppe Calogero, 41049 SASSUOLO MO (IT)
(74) Representative: Modiano, Micaela Nadia

(57) **Abstract**

A system (10) for generating customized digital audiovisual content with speech synthesis, comprising at least one data server computer (20), configured to produce a container comprising at least basic data of a customized content, and at least one client computer (36), provided with means (44) for playback of the customized content, the at least one data server computer (20) being connected to the at least one client computer (36), the customized content comprising a video component and a speech synthesis audio component; the at least one client computer (36) comprises means (40) for generating the customized content starting from the container; the system (10) comprises further at least one TTS server computer (30), provided with a TTS engine (32), for the generation of the speech synthesis audio component starting from text data comprised within the basic data present in the container, the at least one TTS server computer (30) being connected to the at least one client computer (36).

## Description

The present invention relates to a system and a method for generating customized digital audiovisual content with speech synthesis, which is particularly but not exclusively useful and practical in the field of communication and remote customer services to clients performed remotely, for creating customized content suitable to explain to a customer the content of an electronic document, such as can be for example a bank statement, a bill or an invoice of which he is the recipient.

Customized digital audiovisual content, hereinafter identified for the sake of brevity also as customized content, comprises both a video component and an audio component and currently is used by companies, particularly by banks and service companies, to remotely communicate with their clients more effectively, as well as more cheaply, than traditional paper communications.

A customized content can in fact accompany an electronic document, such as can be for example a bank statement, a bill or an invoice, being incorporated or linked to it, in order to guide the customer in reading and understanding said electronic document.

The audio component is a very important means of expression within a customized content, in particular if it comprises synthesized speech, i.e., audio speech that derives from a speech synthesis process, or Text To Speech (in acronym TTS), performed by means of known procedures starting from text data.

By way of example, the audio component with speech synthesis of a customized content can greet the customer by name and surname and then explain the various parts of the bank statement, bill or invoice, reading the corresponding most important aspects, such as the expiration date and the balance.

Within the scope of remote digital communication with customers, the customized content society must be generated and presented to said client at high speed, thus avoiding unpleasant pauses due to loading and with a sufficiently high and uniform quality level over time.

Various systems for generating customized digital audiovisual content with speech synthesis are currently known in which the customized content, including the corresponding audio component with speech synthesis, are created remotely by utilizing the computing power of powerful server computers used by the senders, such as for example a telephone company, and are then transmitted to the client computers used by the recipients, i.e., the customers, via a telematic communications network, such as can be for example the Internet.

In practice, these known systems generate the customized content on a remote server computer, for example in the MP4 format, and then the client computer receives the already generated customized content, for example via streaming, that must be played back only by said client computer, i.e., presented to the recipient.

These systems of a known type, however, are not free from drawbacks, which include the fact that the generation of large quantities of customized content on the part of remote server computers, albeit powerful ones, tends to stress said servers. This occurs both in terms of load of the computational resources, since the servers are pushed to operate constantly close to 100% of their computing capacity, or in any case with very high load percentages, and in terms of load distribution and work time, since customized content is generated 24 hours a day and 365 days a year.

Another drawback of these systems of a known type resides in that a customized content generated by the remote servers often consists of a considerably large file. Its transmission to the corresponding recipient client not only likewise occupies computational resources of the server but most of all requires a high transmission bandwidth, both as regards band availability on the server side and as regards band availability, which is often relatively modest, on the client side of the recipient.

In particular, in the mass production of customized content intended for example for customers, the audio component with speech synthesis has a significant positive quantitative impact, understood as the quantity of data or size of the corresponding file, which derives from the need to obtain said effects of speed and quality.

The aim of the present invention is to overcome the limitations of the background art described above, by providing a system and method for generating customized digital audiovisual content with speech synthesis that allow to obtain better effects than obtainable with known solutions and/or similar effects at a lower cost and with higher performance.

Within the scope of this aim, an object of the present invention is to conceive a system and a method for generating customized digital audiovisual content with speech synthesis that allow to reduce the stress to which the remote server computers of the senders are subjected to create the customized content, particularly by reducing the load of the computational resources of said server computers.

Another object of the present invention is to provide a system and a method for generating customized digital audiovisual content with speech synthesis that allow to reduce the transmission bandwidth and the occupation of computational resources of the remote server computers of the senders for the transmission of the customized content to the corresponding recipient client computers.

A further object of the present invention is to conceive a system and a method for generating customized digital audiovisual content with speech synthesis which allow to reduce the stress to which the client computers of the recipients are subjected for the playback of the customized content, particularly reducing the load of the computational resources of said client computers and the bandwidth for reception.

Another object of the present invention is to conceive a system and method for generating customized digital audiovisual content with speech synthesis that increase the efficiency of the process for generating the customized content.

Another object of the present invention is to provide a system and a method for generating customized digital audiovisual content with speech synthesis which are highly reliable, relatively simple to provide and at modest costs.

This aim, as well as these and other objects that will become better apparent hereinafter, are achieved by a system for generating customized digital audiovisual content with speech synthesis, comprising at least one data server computer, configured to produce a container which comprises at least basic data of a customized digital audiovisual content, and at least one client computer, provided with means for playing back said customized digital audiovisual content, said at least one data server computer communicating with said at least one client computer via a telematic network, said customized digital audiovisual content comprising a video component and a speech synthesis audio component, characterized in that said at least one client computer comprises means for generating said customized digital audiovisual content starting from said container, and in that said system further comprises at least one TTS server computer, provided with a TTS engine for generating said speech synthesis audio component starting from text data comprised in said basic data provided in said container, said at least one TTS server computer being connected to said at least one client computer via said telematic network.

This aim and the intended objects are also achieved by a method for generating customized digital audiovisual content with speech synthesis, a customized digital audiovisual content comprising a video component and a speech synthesis audio component, characterized in that it comprises the steps that consist in sending a container comprising at least basic data of said customized digital audiovisual content, from at least one data server computer toward at least one client computer; receiving said container, on the part of said at least one client computer; requesting the services offered by at least one TTS server computer, sending a TTS request which comprises text data comprised within said basic data provided in said container; receiving said TTS request, on the part of said at least one TTS server computer; generating, by means of a TTS engine comprised in said at least one TTS server computer, said speech synthesis audio component starting from said text data comprised in said basic data that are present in said container; sending said speech synthesis audio component from said at least one TTS server computer toward said at least one client computer; creating, by virtue of generation means comprised within said at least one client computer, said customized digital audiovisual content starting from said container; playing back said customized digital audiovisual content, displaying it and presenting it by virtue of playback means comprised within said at least one client computer.

Further characteristics and advantages of the invention will become better apparent from the description of a preferred but not exclusive embodiment of the system and method for generating customized digital audiovisual content with speech synthesis according to the invention, illustrated by way of nonlimiting example in the accompanying drawings, wherein:

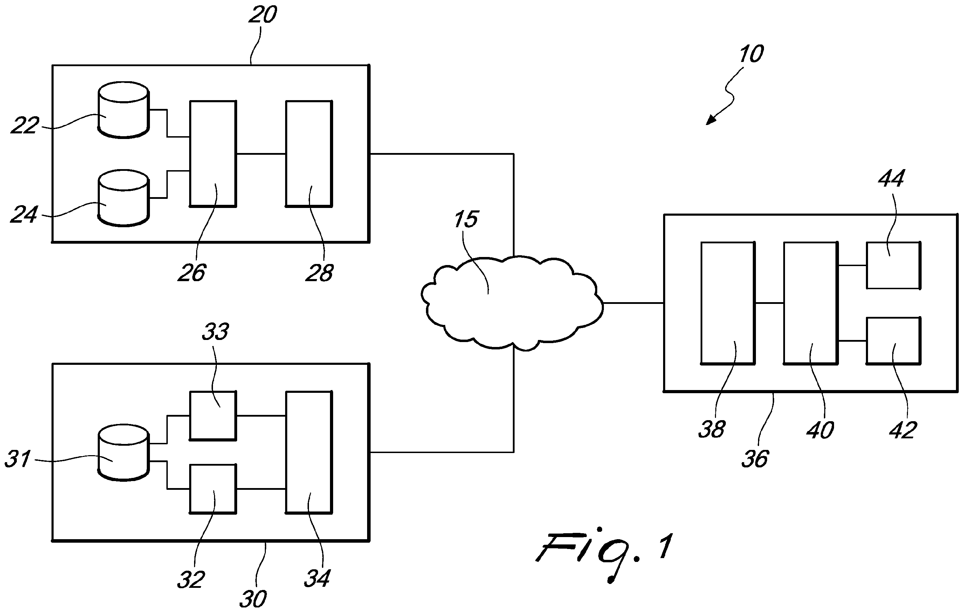

Figure 1 is a block diagram of a possible embodiment of the system for generating customized digital audiovisual content with speech synthesis, according to the present invention;

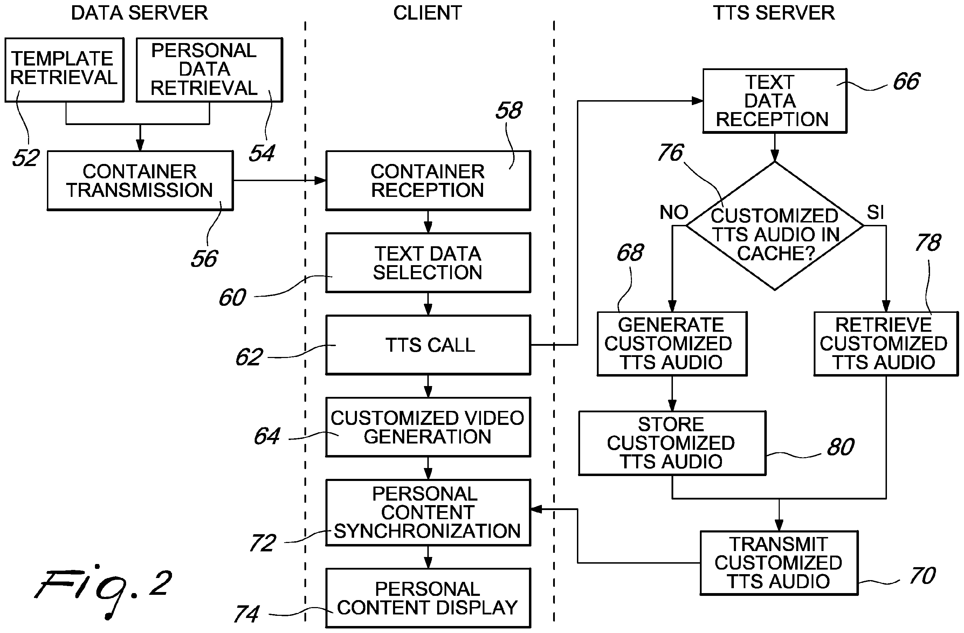

Figure 2 is a flowchart of a possible embodiment of the method for generating customized digital audiovisual content with speech synthesis, according to the present invention.

With reference to the figures, the system for generating customized digital audiovisual content with speech synthesis according to the invention, designated generally by the reference numeral 10, comprises substantially at least one data server computer 20, at least one TTS server computer 30, and at least one client computer 36 used by the recipient of the customized content, the client computer 36 being connected to the data server computers 20 and the TTS servers 30 via a telematic communication network 15, such as can be for example the Internet.

The data server computer 20 is configured to produce in output a container which comprises the information and basic data of the customized content that will be generated. These basic data comprise at least one template, a set of personal data and a player, which will be described in detail hereinafter.

The data server 20 comprises means 22 for storing templates and needs 24 for storing personal data.

The templates are standard models that a company uses for remote communication toward its own customers, each template being provided with a clearly defined graphical layout, which comprises in particular the corresponding animations (images, background music, and so forth), preferably of the web type, i.e., in HTML language, at least in its version 5.

In one embodiment of the system 10 according to the invention, the animations comprised in the templates stored in the means 22, and consequently in the customized digital audiovisual content, can be provided in HTML language, at least in its version 5, by means of adapted known authoring applications based on the drag and drop graphical interface technique along a timeline. Some examples of these known authoring applications for the provision of animations are Adobe Animate CC, Google WebDesigner, Incomedia WebAnimator.

The personal data are instead all the data and information related to the specific recipients, for example related to the customers of a telephone company, each set of personal data being contained in the electronic document that the company wishes to send to a specific recipient customer.

By way of example, in the case of a telephone bill, said personal data of the customer who is the recipient of said bill can include the name and surname of the customer, the taxpayer identification code of the customer, the identification code of the contract signed by the customer, the monthly cost for local calls, the monthly cost for long-distance calls, the monthly cost for data traffic, the balance of the bill, and so forth.

The data server 20 comprises means 26 for retrieving at least one template from the means 22 for storing templates, and for picking up a set of personal data from the means 24 for storing personal data.

The retrieval of the template and of the set of personal data by the retrieval means 26 occurs depending on the type of electronic document that the company wishes to send, depending on the type of remote communication that the company wishes to perform, and/or depending on the specific customer who is the recipient of the sent electronic document.

These means 26 for retrieving the template and the set of personal data enclose the information retrieved inside a container, which is constituted for example by code in HTML language, at least in its version 5.

In the container thus produced, the retrieval means 26 also include a player, using preferably a corresponding PURL (Personalized Uniform Resource Locator), said player comprising the functions and instructions required to generate the video component and the speech synthesis audio component of the customized content. The player further comprises the functions and instructions required for the composition and synchronization of the two generated components. The player further comprises the functions and instructions required for animation control. This player is constituted for example by a program implemented in the JavaScript language.

In particular, the player included in the container comprises the instructions for generating the audio component of the customized content starting from the text data comprised in the basic data that are present within said container, said text data being referable both to the template and to the personal data.

The data server 20 finally comprises transceiver means 28. The transceiver means 28 are adapted to send the container to the client 36 via the telematic communication network 15.

The TTS server computer 30 is configured to produce in output, following an appropriate request sent by the client 36, the speech synthesis audio component of the customized content that will be generated.

The TTS server 30 comprises a TTS engine 32, i.e., an engine that is specifically implemented and optimized to generate, for example following specific commands in SSML (Speech Synthesis Markup Language), an audio speech in the form of one or more audio files, deriving from a speech synthesis or Text To Speech (TTS in acronym) process, performed by means of known procedures starting from text data in input. The audio speech generated by the TTS engine 32 is the audio speech synthesis of the customized content that will be generated.

The TTS server 30 comprises means 31 for storing speech synthesis audio components generated previously by the TTS engine 32; in practice, the storage means 31 act as a cache memory within a caching technique that will be described in detail hereinafter.

The TTS server 30 a comprises means 33 for retrieving at least one speech synthesis audio component from the means 31 for storing speech synthesis audio components.

The retrieval of the speech synthesis order component on the part of the retrieval means 33 occurs on the basis of the verification, on the part of the TTS server 30, of the availability or not of the speech synthesis audio component in the storage means 31.

The TTS server 30 comprises transceiver means 34. The transceiver means 34 are adapted to receive from the client 36 the request for their services, also known as "TTS request", via the telematic communication network 15, the TTS request also comprising the text data, which can be referred both to the template and to the personal data, comprised within the basic data enclosed in the container produced previously by the data server 20 and received by the client 36.

In one embodiment of the invention, the TTS server 30 is configured to check the authorization of the TTS request, in order to check that the requesting client 36, i.e., the player, is authorized to perform the TTS request, i.e., obtain the speech synthesis audio component generated by the TTS server 30. This check is performed by checking an authorization key which is attached to the TTS request and is digitally signed in order to avoid tampering.

The transceiver means 34 are further suitable to send to the client 36 said one or more audio files via the telematic communication network 15, said one or more audio files being in practice the audio speech generated by speech synthesis in output from the TTS engine 32.

The client computer 36 is configured to create the customized content that is the result of the combination of the video component and of the speech synthesis audio component and to display it and present it to the recipient.

The client 36 comprises transceiver means 38. The transceiver means 38 are adapted to receive the container produced by the data server 20, via the telematic communication network 15. The transceiver means 38 are further adapted to send the call to the TTS server 30 via the telematic communication network 15. The transceiver means 38 are further adapted to receive the one or more audio files generated by the TSS server 30 via the telematic communication network 15.

The client 36 comprises means 40 for generating a customized digital audiovisual content starting from the container previously produced by the data server 20 and in particular configured to generate the video component and to compose and synchronize the speech synthesis audio component, constituted by the one or more audio files that arrive from the TTS server 30, with the video component.

In a preferred embodiment of the system 10 for generating customized digital audiovisual content with speech synthesis according to the invention, the means 40 for generating a customized content comprise a browser which is compatible with HTML, at least in its version 5, with CSS, at least in its version 3, and with JavaScript, and this generation occurs when the browser opens the container.

In practice, the means 40 for generating a customized content execute the instructions comprised within the player included in the container, which are necessary for the generation of the video component on the part of the generation means 40 and of the speech synthesis audio component on the part of the TTS server 30 and are also necessary for the composition and synchronization of the two generated components.

The client 36 comprises user interface means 42, which are configured in order to display and present to the recipient a plurality of commands, preferably in the form of buttons, which correspond to functionalities for the control of the customized digital audiovisual content.

The user interface means 42 are further configured to detect the selection, on the part of the recipient, of one or more commands from the plurality of commands that correspond to functionalities for control of the customized digital audiovisual content.

These user interface means 42 display the plurality of commands that correspond to functionalities for the control of the customized digital audiovisual content and detect their selection by the recipient in a manner which is constant and continuous over time.

In a preferred embodiment of the system 10 for the generation of customized digital audiovisual content with speech synthesis according to the invention, the configuration of the user interface means 42 occurs by means of the player.

In practice, the user interface means 42 give the recipient the possibility to control in various manners, by means of the selection of appropriate commands displayed by the client 36, the generation and playback of the customized digital audiovisual content.

In a preferred embodiment of the system 10 according to the invention, the user interface means 42 comprise a browser which is compatible with HTML, at least in its version 5, with CSS, at least in its version 3, and with JavaScript.

In one embodiment of the system 10 according to the invention, the user interface means 42 comprise the CHANGE SCENE command, which is adapted to move to the preceding scene or to the next scene during the playback of at least one animation, preferably a web animation, comprised in the customized digital audiovisual content, of course if this animation is composed of a plurality of scenes.

Finally, the client 36 comprises means 44 for playback of the customized content generated by the generation means 40, which are adapted to display and present to the recipient the resulting customized content, the playback means 44 comprising for example a screen or a display and at least one loudspeaker.

In a preferred embodiment of the system 10 according to the invention, the playback means 44 comprise a browser which is compatible with HTML, at least in its version 5, with CSS, at least in its version 3, and with JavaScript.

In practice, the content that is customized, displayed and presented to the recipient is constituted both by a video component and by an audio component, the first component comprising a set of fixed and/or moving graphical elements, the second component comprising an audio speech generated by speech synthesis.

The customized content is composed of a fixed part, i.e., the template that is common to all the recipients of the same type of electronic document or of the same type of remote communication, and a variable or customizable part, i.e., the set of personal data related to a specific customer who is the recipient of the electronic document that the company has sent.

The data server 20 of the company produces a container and sends it, via the telematic communication network 15, to the client 36 used by the recipient customer, said container comprising both the fixed part (template) and the variable or customizable part (personal data) and the player.

The client 36 of the recipient, particularly the means 40 for generating a customized content, processes the received container, executing the instructions contained in particular in the player, in order to generate a corresponding customized content to be displayed by virtue of the playback means 44.

The generation means 40 of the client 36 comprise selection means which extract the text data comprised in the basic data that are present within the container, said text data being referable both to the template and to the personal data. The generation means 40 of the client 36 then request the services offered by the TTS server 30 by means of a suitable call that is sent to the TTS server 30, said TTS request comprising the previously selected text data.

The speech synthesis audio component of the customized content that is intended for the customer is then generated by means of the TTS engine 32, which is comprised in the TTS server 30, following a request on the part of the means 40 for generating a customized content, which are comprised within the client 36, and starting from the text data previously selected by the generation means 40 of the client 36.

The video component of the customized content intended for the customer is instead generated by the client 36, in particular by the means 40 for generating a customized content, starting from the basic data that are present in the container, said container comprising the player, the template with the corresponding animations, preferably of the web type, and the set of personal data.

The customized digital audiovisual content is thus generated on the client side starting from the container, which includes the information related to the customized digital audiovisual content, i.e., the template with the corresponding animations, preferably of the web type, and the set of personal data, as well as the player.

Going back to the example of the telephone bill, the personal data, i.e., the variable part, relates to the data and information contained in said bill, which are different for each customer of the telephone company, while the template, i.e., the fixed part, is a model that corresponds to the bill of said telephone company.

The video component of the customized content generated and subsequently played back contains images of parts of the bill that contains the personal data of the recipient customer, and its speech synthesis audio component reads and explains to the recipient customer the various parts of the bill.

For example, the speech synthesis audio component of the customized content that accompanies a telephone bill may be "Hello Mario, this is the bill for the period from 01 January 2016 to 29 February 2016. The balance is 53.00 euros and the deadline for payment is 20 March 2016. These are the details of your usage... ".

The method for generating customized digital audiovisual content with speech synthesis according to the present invention develops in the following steps.

Initially, in step 52, one proceeds by retrieving at least one template, which is stored in a data server computer 20, in particular in the corresponding storage means 22. At the same time, in step 54, one proceeds by retrieving a set of personal data related to a specific recipient which are again stored in the data server 20, particularly in the corresponding storage means 24.

Then, in step 56 the data server 20 produces in output a container that comprises the information and the basic data of the customized content that will be generated. These basic data comprise at least one template, a set of personal data, and a player.

In particular, in step 56 the data server 20 encloses the template retrieved in step 52 and the set of personal data retrieved in step 54, together with a player, preferably by using a corresponding PURL (Personalized Uniform Resource Locator), within a container, constituted for example by code in HTML 5 language, and sends the container thus produced toward a client computer 36 used by the recipient of the customized content via a telematic communications network 15.

Subsequently, in step 58 the container sent by the data server 20 received by the client 36, again by means of the telematic communication network 15.

Once the container has been received, in step 60 the client 36 selects and extracts the text data comprised in the basic data that are present within the container, these text data being referable both to the template and to the personal data.

In step 62 the client 36 requests the services offered by a TTS server 30 by means of a suitable call sent to the TTS server 30 via the telematic communication network 15, said TTS request comprising the text data selected previously.

In step 66, the TTS server 30 receives the TTS request, which comprises the text data previously selected by the client 36, again by means of the telematic communication network 15.

In one embodiment of the invention, following the step 66, the TTS server 30 is configured to perform a check of the authorization of the TTS request, in order to check that the requesting client 36, i.e., the player, is authorized to perform the TTS request, i.e., to obtain the speech synthesis audio component generated by the TTS server 30. This check is performed by checking an authorization key which is attached to the TTS request and is digitally signed in order to avoid tampering.

In step 76 the TTS server 30 analyzes the text data that are comprised in the TTS request, said request comprising for example specific commands in the SSML language (Speech Synthesis Markup Language), then applying a caching technique in order to increase the performance in terms of response speed and reduce the stress to which the TTS server 30 is subj ected.

If the requested speech synthesis audio component is already available in the storage means 31, i.e., in the cache memory, in step 78 the TTS server 30 retrieves the speech synthesis audio component without generating it again.

If instead the speech synthesis audio component is not available in the storage means 31, i.e., in the cache memory, in step 68 the TTS server 30 generates the speech synthesis audio component of the customized content by means of known procedures starting from the text data in input in the form of one or more audio files.

Then in step 80 the TTS server 30 stores the speech synthesis audio component, generated in step 68, in the storage means 31, i.e., in the cache memory, in association with the text data or with a portion thereof. Subsequent TTS requests related to the same speech synthesis audio component will be served more rapidly without incurring additional costs for generating the audio component, since it is already available in the storage means 31, i.e., in the cache memory.

In one embodiment of the invention, the content of the storage means 31, i.e., of the cache memory, is distributed geographically on various TTS servers 30 that are spread around the world, so that the retrieval and subsequent transmission of the speech synthesis audio component are as fast as possible, regardless of the origin of the TTS request.

Once the speech synthesis audio component of the customized content has been generated in step 68 or retrieved in step 78, in step 70 said speech synthesis audio component is sent via the telematic communication network 15, from the TTS server 30 toward the client 36 used by the recipient of the customized content.

At the same time as the steps 66, 68 and 70, in step 64 the video component of the customized content is generated by the client 36, starting from the basic data that are present in the container; said container comprising the player, the template retrieved in step 52, with the corresponding animations, preferably of the web type, and the set of personal data retrieved in step 54.

In step 72 the client 36 receives, via the telematic communication network 15, the speech synthesis audio component of the customized content generated by the TTS server in step 68 and sent by the TTS server 30 in step 70.

In particular, in step 72 the client 36 composes and synchronizes the speech synthesis audio component that has just been received with the video component of the customized content generated by the client 36 in step 64, thus creating a customized digital audiovisual content.

Finally, in step 74 the client 36 plays back the customized content created in step 72, displaying it and presenting it to the recipient by means of adapted playback means 44, which are constituted for example by a screen or a display and by at least one loudspeaker.

In a preferred embodiment of the system and method for generating customized digital audiovisual content with speech synthesis according to the present invention, the generation of the video component and of the speech synthesis audio proponent, as well as the composition and synchronization of the two generated components, occur at runtime, i.e., during the display of the corresponding customized content.

In practice, the generation of the video component and of the speech synthesis audio component and their composition and synchronization are performed continuously over time during the display of the corresponding customized content.

One embodiment of the system and of the method for generating customized digital audiovisual content with speech synthesis according to the present invention can be used to create a customized content which is addressed specifically to the recipient customer of a bank statement, a bill or an invoice.

In this case, the template, with the corresponding animations, preferably of the web type, and the player, which comprises the functions and instructions required for the generation of the video component and of the speech synthesis audio component of the customized content, are associated with the type of bank statement, bill or invoice, which changes from one provider to another, while the personal data in the customized content are associated with the specific recipient client of the bank statement, bill or invoice.

By way of example, in the case of a telephone bill, the personal data of the recipient client of the bill can include name and surname of the customer, the taxpayer identification number of the customer, the identification code of the contract subscribed by the customer, the monthly cost for local calls, the monthly cost for long distance calls, the monthly cost for data traffic, the balance of the bill, and so forth.

Of course, two different recipient customers have different personal data, consequently leading to the generation of two different customized contents which however utilize the same template, with the corresponding animations, preferably of the web type.

In practice it has been found that the invention achieves fully the intended aim and objects. In particular, it has been shown that the system and method for generating customized digital audiovisual content with speech synthesis thus conceived allow to overcome the quality limitations of the background art, since they allow to obtain better effects than obtainable with known solutions and/or similar effects at a lower cost and with higher performance, particularly in the case of generation of large quantities of customized content.

The system and method for generating customized digital audiovisual content with speech synthesis according to the present invention allow to reduce considerably the stress to which the remote server computers of the senders are subjected for the creation of said customized content, in particular by reducing considerably the load of the computational resources of said server computers, by virtue of the fact that the customized content with speech synthesis is composed on the client computers instead of on the server computers, and by virtue of the use of the caching technique which reduces the stress related to TTS generation.

Another advantage of the system and method for generating customized digital audiovisual content with speech synthesis according to the present invention resides in that they allow to reduce the transmission bandwidth and the occupation of computational resources of the server computers of the senders for the transmission of the customized content to the corresponding recipient clients, also by virtue of the optional use of progressive download to reduce the stress on the communication network between the server and the client.

The generation of the video component of the customized content on the part of the client and the generation of the speech synthesis audio component of the customized content on the part of an appropriately implemented TSS server in fact allow to reduce the transmission bandwidth required for the transfer of the customized content since the container, which comprises the template with the corresponding animations preferably of the web type, the set of personal data and the player, is smaller than a customized content previously generated and composed by a single server for example in the MP4 format.

In summary, the system and method according to the present invention allow to reduce the load of the server computers both for the generation of the customized content and for their transmission to the corresponding recipient clients.

A further advantage of the system and of the method for generating customized digital audiovisual content with speech synthesis according to the present invention resides in that they allow to reduce considerably the stress to which the client computers of the recipients are subjected to playback the customized content, in particular by reducing considerably the load of the computational resources of said client computers and the reception bandwidth, by virtue of the fact that the speech synthesis audio component of the customized content is generated by an appropriately implemented TTS server.

Another advantage of the system and of the method for the generation of customized digital audiovisual content with speech synthesis according to the present invention resides in that they increase considerably the efficiency of the process for generating customized content.

In summary, the generation of customized digital audiovisual content according to the present methods allows to spare the computational resources of the server and requires a smaller bandwidth for transmission, making it easier and more efficient to present customized content the recipient clients even if the client is constituted by a mobile device, such as for example a smartphone or a tablet.

Although the system and the method for generating customized digital audiovisual content with speech synthesis according to the invention have been conceived in particular for creating customized digital audiovisual content suitable to explain to a customer the content of an electronic document, such as can be for example a bank statement, a bill or an invoice of which he is the recipient, they can in any case be used more generally to create digital customized digital audiovisual content in general, designed for any application in which their use can be useful, improving the offered service; for example, said customized content can be applied in the field of marketing or in the field of education and teaching.

The invention thus conceived is susceptible of numerous modifications and variations, all of which are within the scope of the accompanying claims. All the details may further be replaced with other technically equivalent elements.

In practice, the materials used, as well as the contingent shapes and dimensions, may be any according to the requirements and the state of the art.

To conclude, the scope of the protection of the claims must not be limited by the illustrations or preferred embodiments shown in the description by way of example, but rather the claims must comprise all the characteristics of patentable novelty that reside in the present invention, including all the characteristics that would be treated as equivalents by the person skilled in the art.

The disclosures in Italian Patent Applications no. 102016000015420 (UB2016A000771) and no. 102016000022200 (UA2016A001305), from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (10) for generating customized digital audiovisual content with speech synthesis, comprising at least one data server computer (20), configured to produce a container comprising at least basic data of a customized digital audiovisual content, and at least one client computer (36), provided with means (44) for playback of said customized digital audiovisual content, said at least one data server computer (20) being connected to said at least one client computer (36) over a telematic communication network (15), said customized digital audiovisual content comprising a video component and a speech synthesis audio component, **characterized in that** said at least one client computer (36) comprises means (40) for generating said customized digital audiovisual content starting from said container, and **in that** said system (10) comprises further at least one TTS server computer (30), provided with a TTS engine (32), for the generation of said speech synthesis audio component starting from text data comprised within said basic data present in said container, said at least one TTS server computer (30) being connected to said at least one client computer (36) over said telematic communications network (15).

2. The system (10) for generating customized digital audiovisual content with speech synthesis according to claim 1, **characterized in that** said generation means (40) of said at least one client computer (36) are configured to generate said video component starting from said basic data present in said container and to compose and synchronize said speech synthesis audio component with said video component.

3. The system (10) for generating customized digital audiovisual content with speech synthesis according to claim 1 or 2, **characterized in that** said at least one data server computer (20) comprises means (22) for storing templates, means (24) for storing personal data, and means (26) for retrieving at least one of said templates and a set of said personal data, to be enclosed in said container.

4. The system (10) for generating customized digital audiovisual content with speech synthesis according to one or more of the preceding claims, **characterized in that** said generation means (40) of said at least one client computer (36) comprise means for the selection of said text data comprised in said basic data present in said container, said text data being referable both to said template and to said personal data.

5. The system (10) for generating customized digital audiovisual content with speech synthesis according to one or more of the preceding claims, **characterized in that** said generation of said video component and said generation of said speech synthesis audio component and said composition and synchronization of said generated components occur at runtime.

6. A method for generating customized digital audiovisual content with speech synthesis, a customized digital audiovisual content comprising a video component and a speech synthesis audio component, **characterized in that** it comprises the steps of:
- sending (56) a container comprising at least basic data of said customized digital audiovisual content from at least one data server computer (20) toward at least one client computer (36);
- receiving (58) said container, on the part of said at least one client computer (36);
- requesting (62) the services offered by at least one TTS server computer (30), sending a TTS request which comprises text data comprised within said basic data present in said container;
- receiving (66) said TTS request, on the part of said at least one TTS server computer (30);
- generating (68), by means of a TTS engine (40) comprised in said at least one TTS server computer (30), said speech synthesis audio component starting from said text data comprised in said basic data present in said container;
- sending (70) said speech synthesis audio component from said at least one TTS server computer (30) toward said at least one client computer (36);
- creating (64, 72), by virtue of generation means (40) comprised within said at least one client computer (36), said customized digital audiovisual content starting from said container;
- playing back (74) said customized digital audiovisual content, displaying it and presenting it by virtue of playback means (44) comprised in said at least one client computer (36).

7. The method for generating customized digital audiovisual content with speech synthesis according to claim 6, **characterized in that** said step of creating (64, 72) said customized digital audiovisual content comprises the steps that consist in generating (64) said video component starting from said basic data that are present in said container and in composing and synchronizing (72) said speech synthesis audio component with said video component.

8. The method for generating customized digital audiovisual content with speech synthesis according to claim 6 or 7, **characterized in that** it comprises the steps that consist in retrieving (52) at least one template, stored in storage means (22) of said at least one data server computer (20), and in retrieving (54) a set of personal data related to a specific recipient, which are stored in storage means (24) of said at least one data server computer (20).

9. The method for generating customized digital audiovisual content with speech synthesis according to one or more of the preceding claims, **characterized in that** it comprises the step that consists in selecting (60) said text data comprised in said basic data that are present in said container, said text data being referable both to said template and to said personal data.

10. The method for generating customized digital audiovisual content with speech synthesis according to one or more of the preceding claims, **characterized in that** said generation of said video component and said generation of said speech synthesis audio component, and said composition and synchronization of said generated components occur at runtime.
